# EUROPÄISCHE PATENTANMELDUNG

(11) **EP 4 696 554 A1**
(43) Veröffentlichungstag der Anmeldung: **18.02.2026**
(21) Anmeldenummer: 25180955.4
(22) Anmeldetag: 05.06.2025
(51) Int. Cl.: B60N 2/20, B60N 2/015, B60N 2/23, B60N 2/30, B61D 33/00, B60N 2/24

(54) **SITZANORDNUNG UND FAHRZEUG DES PERSONENTRANSPORTS**

(30) Priorität: 13.08.2024 DE 102024207700
(71) Anmelder: Siemens Mobility GmbH, 80997 München (DE)
(72) Erfinder: Schiefer, Benno, 40233 Düsseldorf (DE)
(74) Vertreter: Siemens Patent Attorneys

(57) **Zusammenfassung**

Sitzanordnung (10), vorzugsweise für ein Fahrzeug (1) des Personentransports, umfassend ein Trägerelement (100), zumindest ein Abstützelement (200), das schwenkbar um eine durch das Trägerelement (100) verlaufende Schwenkachse (S) mit dem Trägerelement (100) verbunden ist und eine Fixiereinrichtung (300), die dazu eingerichtet ist, das Abstützelement (200) in zumindest einer Schwenkposition (SP₁, SP₂, SPₙ) relativ zum Trägerelement (100) zu fixieren. Die Fixiereinrichtung (300) weist ein Fixierelement (310) auf, das mit dem Abstützelement (200) verbunden ist und mit dem Abstützelement (200) zusammen um die Schwenkachse (S) schwenkbar ist.

## Beschreibung

Die Erfindung betrifft eine Sitzanordnung, vorzugsweise für ein Fahrzeug des Personentransports, umfassend ein Trägerelement, zumindest ein Abstützelement, das schwenkbar um eine durch das Trägerelement verlaufende Schwenkachse mit dem Trägerelement verbunden ist und eine Fixiereinrichtung, die dazu eingerichtet ist, das Abstützelement in zumindest einer Schwenkposition relativ zum Trägerelement zu fixieren.

Ferner betrifft die Erfindung ein Fahrzeug des Personentransports, umfassend zumindest eine solche oder wie nachfolgend beschrieben, weitergebildete Sitzanordnung.

Solche Sitzanordnungen kommen üblicherweise bei Commuterbahnen, Regionalbahnen oder S-Bahnen, zum Einsatz und sind speziell an die Bedürfnisse solcher Bahnen angepasst.

Eine gattungsgemäße Sitzanordnung ist beispielsweise aus dem Dokument WO 2023/156098 A1 bekannt.

Bei der Entwicklung einer Verriegelungskinematik für eine Sitzanordnung, wie sie aus der WO 2023 / 156098 A1 bekannt ist, sind die generierbaren Hub- bzw., Zugkräfte mittels Hub- und Zugmagneten begrenzt groß.

Gemäß der Sitzanordnung gemäß dem Dokument WO 2023/156098 A1 ist vorgesehen, dass ein Hubmagnet mittels Magnetkraft einen Verriegelungsschlitten aus dem Verriegelungsbereich zieht und den Pendelarm des Pendulum-Seats für eine Drehbewegung um die Cantilever-Achse freigibt.

Zum erneuten Verriegeln wurde der Hubmagnet stromlos geschaltet und der Hubschlitten mittels vorgespannter Federn wieder in die Verriegelungsposition zurückgeführt. Es hat sich gezeigt, dass bauartbedingt die Magnetkraft nicht ausreichend stark ist, insbesondere wenn ein Fahrgast eine gewisse Kraft auf den Pendelarm ausübt. In diesem Fall schaffte es der Hubmagnet nicht mehr den Schlitten gegen diesen Widerstand zu bewegen.

Der Erfindung liegt die Aufgabe zugrunde, eine Sitzanordnung mit Schwenkachse anzugeben, die eine zuverlässigere Ver- und Entriegelung erlaubt.

Diese Aufgabe wird erfindungsgemäß durch eine Sitzanordnung mit den Merkmalen gemäß Anspruch 1 gelöst. Ferner wird die Aufgabe durch ein Fahrzeug des Personentransports gemäß Anspruch 11 gelöst.

Vorteilhafte Ausgestaltungen und Weiterbildungen sind Gegenstand der jeweiligen Unteransprüchen.

Erfindungsgemäß wird eine Sitzanordnung, vorzugsweise für ein Fahrzeug des Personentransports, bereitgestellt, umfassend ein Trägerelement, zumindest ein Abstützelement, das schwenkbar um eine durch das Trägerelement verlaufende Schwenkachse mit dem Trägerelement verbunden ist und eine Fixiereinrichtung, die dazu eingerichtet ist, das Abstützelement in zumindest einer Schwenkposition relativ zum Trägerelement zu fixieren. Die Fixiereinrichtung weist ein Fixierelement auf, das mit dem Abstützelement verbunden ist und mit dem Abstützelement zusammen um die Schwenkachse schwenkbar ist.

Erfindungsgemäß wird ferner ein Fahrzeug des Personentransports bereitgestellt, umfassend zumindest eine solche oder wie nachfolgend beschrieben weitergebildete Sitzanordnung.

Bei dem Fahrzeug des Personentransports handelt es sich vorzugsweise um ein spurgeführtes Fahrzeug, ferner vorzugsweise Schienenfahrzeug.

Zum Personentransport geeignete Fahrzeuge sind spezifisch an den Personentransport angepasst.

Bei der Sitzanordnung handelt es sich insbesondere um eine Sitzanordnung für ein Fahrzeug des Personentransports.

In Ausgestaltung der Sitzanordnung kann vorgesehen sein, dass das Fixierelement in Radialrichtung der Schwenkachse beweglich ist.

Hierdurch wird erreicht, dass unabhängig von der Schwenkposition der Sitzanordnung das Fixierelement entriegeln werden kann.

In Ausgestaltung der Sitzanordnung kann vorgesehen sein, dass das Fixierelement einen Aktuator aufweist, der als ein Linearantrieb ausgebildet ist und einen Riegel, der mit dem Aktuator verbunden ist und durch diesen angetrieben ist.

Vorzugsweise handelt es sich bei dem Linearantrieb um einen Elektromotor, der über ein Getriebe den Riegel in einer linearen Longitudinalbewegung antreibt. Hierdurch können kennlinienunabhängig konstant große Antriebskräfte erreicht werden.

Insbesondere sind diese Kräfte größer als die Kräfte gemäß Stand der Technik, bei dem Hubmagneten eingesetzt werden.

In Ausgestaltung der Sitzanordnung kann vorgesehen sein, dass das Abstützelement einen Hohlraum aufweist, in welchem das Fixierelement angeordnet ist.

Hierdurch wird das Fixierelement in das Abstützelement integriert und ein vorhandener Hohlraum kann auf diesem Wege zur Positionierung des Fixierelements flexibel genutzt werden.

In Ausgestaltung der Sitzanordnung kann vorgesehen sein, dass die Fixiereinrichtung zumindest ein Fallenelement umfasst, wobei das Trägerelement das Fallenelement aufweist.

Hierdurch wird ein Element bereitgestellt, was speziell dazu ausgebildet ist den Riegel der Fixiereinrichtung aufzunehmen.

Vorzugsweise ist das Fallenelement zusätzlich zum Trägerelement vorgesehen und mit dem Trägerelement verbunden, sodass wenn es zu Verschleiß kommt, das Fallenelement austauschbar ist, ohne dass der ganze Träger.

In Ausgestaltung der Sitzanordnung kann vorgesehen sein, dass das Fallenelement zumindest einen Rastpunkt aufweist, der dazu eingerichtet den Riegel aufzunehmen, um das Abstützelement in zumindest einer Schwenkpositionen zu verriegeln, wobei vorzugsweise jeder Schwenkposition ein Rastpunkt zugeordnet ist.

Hierdurch werden definierte Punkte vorgesehen, die eine jeweilige Schwenkposition definieren.

In Ausgestaltung der Sitzanordnung kann vorgesehen sein, dass der Riegel als Bolzen ausgebildet ist und ein distales Ende aufweiset, wobei ein drehbewegliches Drehelement an seinem distalen Ende angeordnet ist.

In Ausgestaltung der Sitzanordnung kann vorgesehen sein, dass das Drehelement elastisch an dem distalen Ende gelagert ist.

Das Drehelement kann bspw. eine Kugel oder eine Rolle sein.

Das Drehelement reduziert dabei die Reibung zwischen dem Riegel und dem Fallenelement.

In Ausgestaltung der Sitzanordnung kann vorgesehen sein, dass das Fallenelement an dem Trägerelement, vorzugsweise endseitig, befestigt ist.

In Ausgestaltung der Sitzanordnung kann vorgesehen sein, dass der Bolzen hohl ausgebildet ist und ein Vorspannelement aufweist.

Durch das Vorsehen des Vorspannelements wird der Einsatz eines Linearantriebs verbessert, da sich das Bolzen nicht mit hoher Kraft gegen das Fallenelement pressen muss. Ferner wird ein Verklemmen des Riegels vermieden.

In Ausgestaltung des Fahrzeugs kann vorgesehen sein, dass das Fahrzeug eine Wand, vorzugsweise eine Seitenwand, aufweist und die Sitzanordnung an der Wand befestigt ist.

Bei dem spurgeführten Fahrzeug handelt es sich beispielsweise um ein Schienenfahrzeug oder eine Magnetschwebebahn, vorzugsweise zum Personentransport.

Vorzugsweise handelt es sich bei dem Schienenfahrzeug um eine Commuterbahn, eine Regionalbahn oder eine S-Bahn.

Nachfolgend soll die Erfindung anhand einer Ausführungsformen mit Bezug auf die Zeichnungen erläutert werden.

Es zeigt:
- Fig. 1: eine schematische perspektivische Darstellung der erfindungsgemäßen Sitzanordnung;
- Fig. 2: eine schematische perspektivische Darstellung eines Trägerelements und einer Fixiereinrichtung der erfindungsgemäßen Sitzanordnung in einer zweiten Schwenkposition;
- Fig.3: eine schematische perspektivische Darstellung des Trägerelements und der Fixiereinrichtung der erfindungsgemäßen Sitzanordnung in einer ersten Schwenkposition;
- Fig. 4: eine schematische Schnittdarstellung des Trägerelements und der Fixiereinrichtung der erfindungsgemäßen Sitzanordnung in einer ersten Schwenkposition;
- Fig. 5: eine schematische Schnittdarstellung des Trägerelements und der Fixiereinrichtung der erfindungsgemäßen Sitzanordnung in der ersten Schwenkposition;
- Fig. 6: eine schematische Schnittdarstellung des Trägerelements und der Fixiereinrichtung der erfindungsgemäßen Sitzanordnung in der zweiten Schwenkposition;
- Fig. 7: eine schematische Schnittdarstellung des Trägerelements und der Fixiereinrichtung der erfindungsgemäßen Sitzanordnung in der zweiten Schwenkposition; und
- Fig. 8: eine schematische Schnittdarstellung des Trägerelements und der Fixiereinrichtung der erfindungsgemäßen Sitzanordnung in der zweiten Schwenkposition.

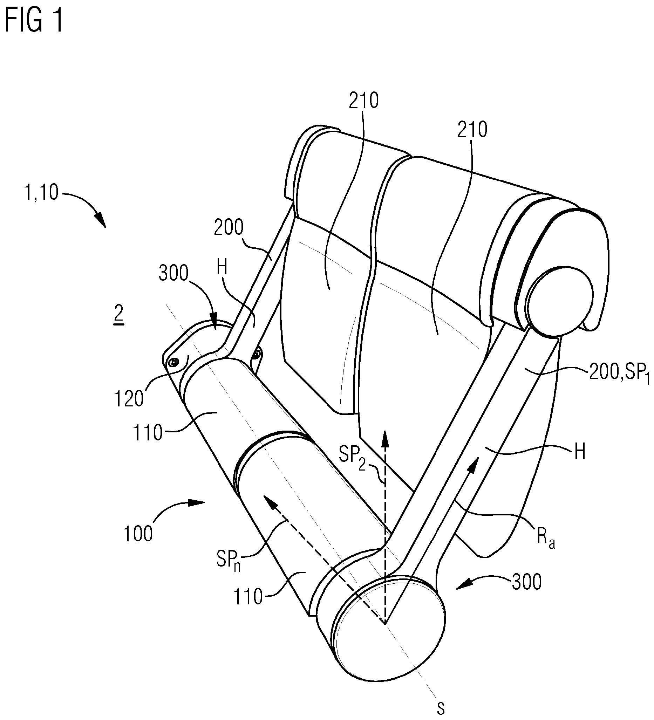

Fig. 1 zeigt eine schematische perspektivische Darstellung der erfindungsgemäßen Sitzanordnung 10 in einer ersten Schwenkposition SP₁.

Die Sitzanordnung 10 gemäß dem Ausführungsbeispiel ist für ein Fahrzeug des Personentransports 1 vorgesehen.

Die Sitzanordnung 10 umfasst ein Trägerelement 100, zumindest ein Abstützelement 200, das schwenkbar um eine durch das Trägerelement 100 verlaufende Schwenkachse S mit dem Trägerelement 100 verbunden ist und eine Fixiereinrichtung 300, die dazu eingerichtet ist, das Abstützelement 200 in zumindest einer Schwenkposition SP₁, SP₂, SPₙ relativ zum Trägerelement 100 zu fixieren.

Das Fahrzeug des Personentransports 1 ist vorzugsweise ein spurgeführtes Fahrzeug, umfassend die zumindest eine Sitzanordnung 10.

Das Fahrzeug 1 des Personentransports weist eine Wand 2, vorzugsweise eine Seitenwand, auf und die Sitzanordnung 10 ist an der Wand 2 befestigt.

Die Sitzanordnung 10 weist zumindest ein erstes Körperstützelement 110 auf. Das zumindest eine erstes Körperstützelement 110 ist in Ausgestaltung als Sitzelement ausgebildet. Das zumindest eine erste Körperstützelement 110 ist mit dem Trägerelement 100 verbunden und ist vorzugsweise umfänglich um das Trägerelement 100 herum angeordnet.

Die Sitzanordnung 10 weist zumindest ein zweites Körperstützelement 210 auf. Das zumindest eine zweite Körperstützelement 210 ist in Ausgestaltung als Anlehnelement ausgebildet. Das zumindest eine zweite Körperstützelement 210 ist mit dem Abstützelement 200 verbunden. Das zumindest eine zweite Körperstützelement kann in unterschiedlichen Drehpositionen relativ zum Abstützelement 200 ausgerichtet werden, um in Abhängigkeit von der Schwenkposition SP₁, SP₂, SPₙ des Abstützelements 200 eine Rückenstütze bzw. eine Rückenlehne für eine sitzende oder ein Stützelement für eine stehende Person auszubilden.

Das Abstützelement 200 ist in zumindest einer Schwenkposition SP₁, SP₂, SPₙ relativ zum Trägerelement 100 ausrichtbar und fixierbar. Gemäß Fig. 1 sind drei Schwenkpositionen SP₁, SP₂, SPₙ dargestellt, in denen das Abstützelement 200 durch die Fixiereinrichtung 300 relativ zum Trägerelement 100 fixierbar ist. Es kann aber auch vorgesehen sein, dass mehr als drei Schwenkpositionen SP₁, SP₂, SPₙ durch das Abstützelement 200 einnehmbar sind.

Das Abstützelement 200 weist einen Hohlraum H auf, in welchem das Fixierelement 310 angeordnet ist.

Das Abstützelement 200 ist endseitig an das Trägerelement 100 angebunden. Es können mehrere Abstützelemente 200 an ein Trägerelement 100 angebunden sein. Gemäß Fig. 1 sind zwei Abstützelemente 200 an das Trägerelement 100 angebunden. Je Abstützelement 200 ist vorzugsweise eine Verriegelungseinrichtung 300 ausgebildet.

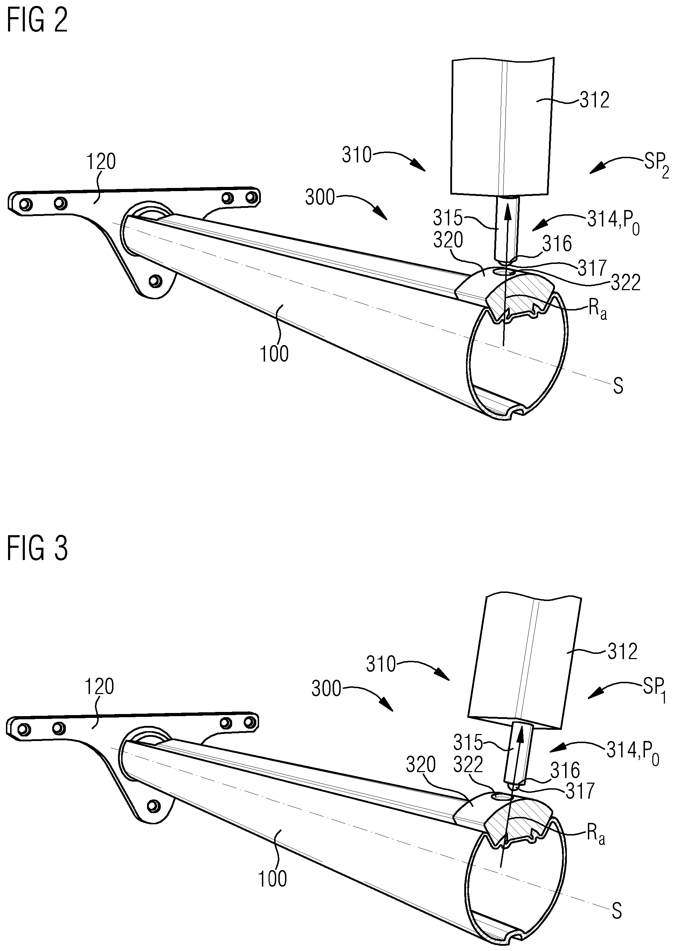

Fig. 2 zeigt eine schematische perspektivische Darstellung eines Trägerelements 100 und einer Fixiereinrichtung 300 der erfindungsgemäßen Sitzanordnung 10 in einer zweiten Schwenkposition SP₂.

Die Fixiereinrichtung 300 weist ein Fixierelement 310 auf, das mit dem Abstützelement 200 verbunden ist und mit dem Abstützelement 200 zusammen um die Schwenkachse S schwenkbar ist.

Das Fixierelement 310 ist in Radialrichtung Ra der Schwenkachse S beweglich.

Das Fixierelement 310 weist einen Aktuator 312 auf, der als ein Linearantrieb ausgebildet ist.

Das Fixierelement 310 weist einen Riegel 314 auf, der mit dem Aktuator 312 verbunden ist und durch diesen angetrieben ist.

Das Trägerelement 100 weist eine Schiene an seiner Oberseite auf.

Die Fixiereinrichtung 300 weist zumindest ein Fallenelement 320 auf.

Das Trägerelement 100 weist das Fallenelement 320 auf. In Ausgestaltung gemäß dem Ausführungsbeispiel ist das Fallenelement 320 mit dem Trägerelement 100 verbunden. Hierzu ist das Fallenelement 320 auf der Oberseite des Trägerelement in einer Schiene des Trägerelements 100 eingeschoben.

Das Fallenelement 320 ist vorzugsweise endseitig am Trägerelement 100 angeordnet, in dem Bereich, wo das jeweilige Abstützelement 200 an das Trägerelement 100 angebunden ist.

Der Riegel 314 kann mehrere unterschiedliche Riegelpositionen P₀, P₁, P₂ einnehmen.

In einer ersten Riegelposition P₀ ist der Riegel 314 vollständig eingefahren und entriegelt. In der ersten Riegelposition P₀ ist kein Kontakt zwischen dem Riegel 314 und dem Fallenelement vorhanden. Das Abstützelement 200 ist gegenüber dem Trägerelement frei beweglich.

In einer zweiten Riegelposition P₁ befindet sich der Riegel 314 in einer Zwischenposition.

In einer der dritten Riegelposition P₂ ist der Riegel 314 vollständig ausgefahren und verriegelt.

Das Fallenelement 320 weist zumindest einen Rastpunkt 322 auf, der dazu eingerichtet den Riegel 314 aufzunehmen, um das Abstützelement 200 in den Schwenkpositionen SP₁, SP₂, SPₙ zu verriegeln.

Vorzugsweise kann vorgesehen sein, dass jeder Schwenkposition SP₁, SP₂, SPₙ ein Rastpunkt 322 zugeordnet ist. Den Figuren ist nur ein Rastpunkt 322 gezeigt.

Der Riegel 314 ist als Bolzen 315 ausgebildet und weist ein distales Ende 316 auf.

Ein drehbewegliches Drehelement 317 ist an seinem distalen Ende 316 angeordnet.

Das Drehelement 317 ist elastisch an dem distalen Ende 316 gelagert.

Der Bolzen 315 ist in Ausgestaltung hohl ausgebildet und weist ein Vorspannelement 318 auf.

Das Vorspannelement 318 spannt das drehbewegliche Drehelement 317 in Richtung des distalen Endes 316 vor, sodass bei einer Druckbelastung auf das Drehelement 317 dieses von dem distalen Ende 316 hinweg in den hohle Bolzen 315 gegen eine Vorspannkraft des Vorspannelements 318 eingelenkt werden kann. Vorzugsweise weisen, das Drehelement 317 und/oder das distale Ende 316 ein Anschlagelement auf.

Wie aus der Figur 2 erkennbar ist, weist das Fallenelement rund um den Rastpunkt 322 herum eine Fase 323 auf.

Der Riegel 314 weist gemäß Fig. 2 die erste Riegelposition P₀ auf.

Fig. 3 bis 8 zeigen die Sitzanordnung und insbesondere die Fixiereinrichtung 300 in unterschiedlichen Stellungen, wobei auf die einzelnen Schwenkposition SP₁, SP₂, SPₙ und Riegelpositionen P₀, P₁, P₂ mit Bezug auf die einzelnen Figuren nachfolgend kurz eingegangen wird.

Fig.3 zeigt eine schematische perspektivische Darstellung des Trägerelements 100 und der Fixiereinrichtung 300 der erfindungsgemäßen Sitzanordnung 10 in der ersten Schwenkposition SP₁.

Der Riegel 314 weist dabei die erste Riegelposition P₀ auf.

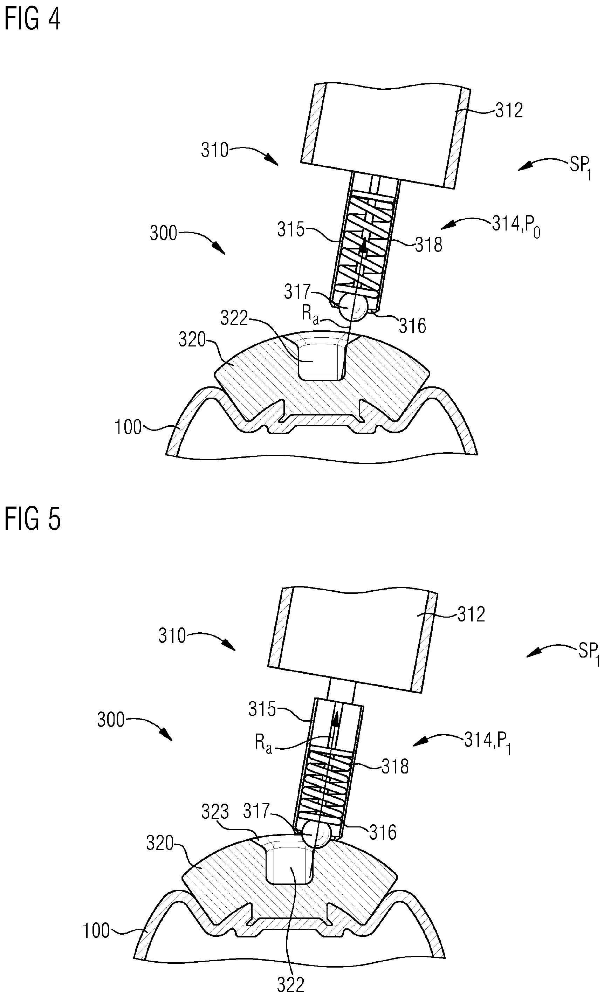

Fig. 4 eine schematische Schnittdarstellung des Trägerelements 100 und der Fixiereinrichtung 300 der erfindungsgemäßen Sitzanordnung 10 in der ersten Schwenkposition SP₁.

Der Riegel 314 weist dabei die erste Riegelposition P₀ auf.

Fig. 5 eine schematische Schnittdarstellung des Trägerelements 100 und der Fixiereinrichtung 300 der erfindungsgemäßen Sitzanordnung 10 in der ersten Schwenkposition SP₁.

Der Riegel 314 weist dabei die zweite Riegelposition P₁ auf.

In Ausgestaltung der Fig. 5 befindet sich die Sitzanordnung 10 in der ersten Schwenkposition SP₁ und ist der Riegel 314 in der zweiten Riegelposition P₁, so steht der Riegel 314 mit der Fase 322 in Kontakt.

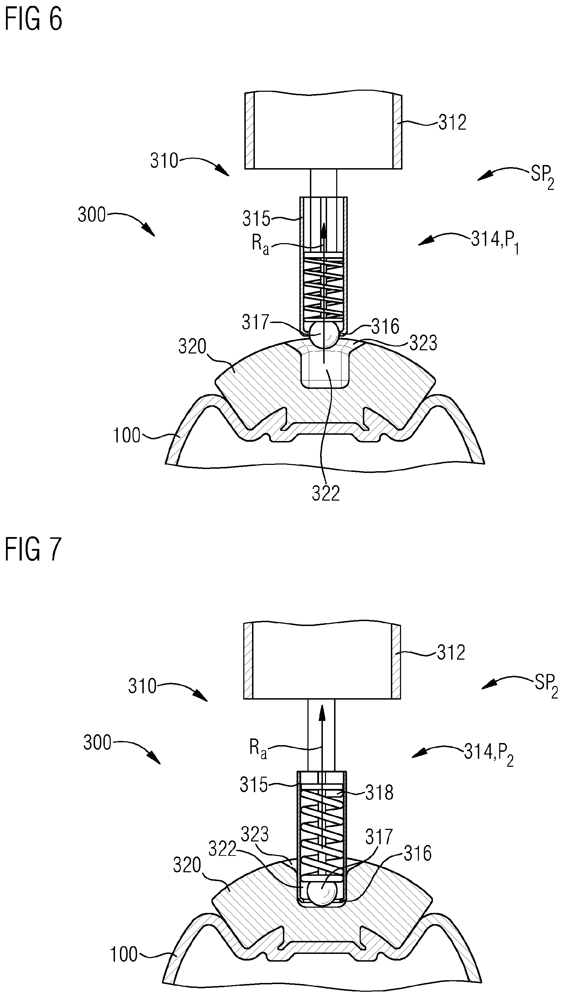

Fig. 6 eine schematische Schnittdarstellung des Trägerelements 100 und der Fixiereinrichtung 300 der erfindungsgemäßen Sitzanordnung 10 in der zweiten Schwenkposition SP₂.

Der Riegel 314 weist dabei die zweite Riegelposition P₁ auf.

Fig. 7 eine schematische Schnittdarstellung des Trägerelements 100 und der Fixiereinrichtung 300 der erfindungsgemäßen Sitzanordnung 10 in der zweiten Schwenkposition SP₂.

Der Riegel 314 weist dabei die dritte Riegelposition P₂ auf. Der Riegel 314 ist dabei, vorzugsweise durch eine Vorspannkraft des Vorspannelements 318, vollständig ausgelenkt, in dem Fallenelement 322 eingerastet und dadurch vollständig verriegelt.

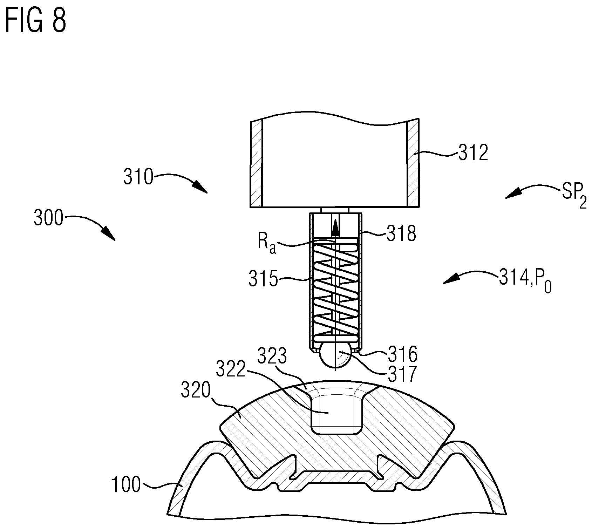

Fig. 8 eine schematische Schnittdarstellung des Trägerelements 100 und der Fixiereinrichtung 300 der erfindungsgemäßen Sitzanordnung 10 in der zweiten Schwenkposition SP₂.

Der Riegel 314 weist dabei die erste Riegelposition P₀ auf.

Zum Entriegeln also dem Übergang zwischen dem Zustand der Sitzanordnung 10 aus Fig. 7 zu dem Zustand der Sitzanordnung 10 in Fig. 8 wird der Riegel 314 durch den Aktuator 312 mit einem voreingestellten Hub nach oben gezogen, sodass es wieder in der ersten Schwenkposition SP₁ ist.

Zum Verriegeln also dem Übergang zwischen dem Zustand der Sitzanordnung 10 aus Fig. 8 zu dem Zustand der Sitzanordnung 10 in Fig. 7 wird das Getriebegestänge um den gleichen Hubweg wieder zurückbewegt. Hierbei wird das Vorspannelement 318 innerhalb des hohlen Bolzens 314 zusammengepresst und erzeugt dadurch eine kontrollierte Vorspannkraft.

Unabhängig vom grammatikalischen Geschlecht eines bestimmten Begriffes sind Personen mit männlicher, weiblicher oder anderer Geschlechteridentität mit umfasst.

## Patentansprüche

1. Sitzanordnung (10), vorzugsweise für ein Fahrzeug des Personentransports (1), umfassend
ein Trägerelement (100), zumindest ein Abstützelement (200), das schwenkbar um eine durch das Trägerelement (100) verlaufende Schwenkachse (S) mit dem Trägerelement (100) verbunden ist und eine Fixiereinrichtung (300), die dazu eingerichtet ist, das Abstützelement (200) in zumindest einer Schwenkposition (SP₁, SP₂, SPₙ) relativ zum Trägerelement (100) zu fixieren,
**dadurch gekennzeichnet, dass**
die Fixiereinrichtung (300) ein Fixierelement (310) aufweist, das mit dem Abstützelement (200) verbunden ist und mit dem Abstützelement (200) zusammen um die Schwenkachse (S) schwenkbar ist.

2. Sitzanordnung (10), nach Anspruch 1,
**dadurch gekennzeichnet, dass**
das Fixierelement (310) in Radialrichtung (Ra) der Schwenkachse (S) beweglich ist.

3. Sitzanordnung (10), nach Anspruch 1 oder 2,
**dadurch gekennzeichnet, dass**
das Fixierelement (310) einen Aktuator (312) aufweist, der als ein Linearantrieb ausgebildet ist und einen Riegel (314), der mit dem Aktuator (312) verbunden ist und durch diesen angetrieben ist.

4. Sitzanordnung (10), nach einem der vorhergehenden Ansprüche,
**dadurch gekennzeichnet, dass**
das Abstützelement (200) einen Hohlraum aufweist, in welchem das Fixierelement (310) angeordnet ist.

5. Sitzanordnung (10), nach einem der vorhergehenden Ansprüche,
**dadurch gekennzeichnet, dass**
die Fixiereinrichtung (300) zumindest ein Fallenelement (320) umfasst, wobei das Trägerelement (100) das Fallenelement (320) aufweist.

6. Sitzanordnung (10), nach Anspruch 5,
**dadurch gekennzeichnet, dass**
das Fallenelement (320) zumindest einen Rastpunkt (322) aufweist, der dazu eingerichtet den Riegel (314) aufzunehmen, um das Abstützelement (200) in zumindest einer Schwenkpositionen (SP₁, SP₂, SPₙ) zu verriegeln, wobei vorzugsweise jeder Schwenkposition (SP₁, SP₂, SPₙ) ein Rastpunkt (322) zugeordnet ist.

7. Sitzanordnung (10), nach einem der Ansprüche 3 bis 6,
**dadurch gekennzeichnet, dass**
der Riegel (314) als Bolzen (315) ausgebildet ist und ein distales Ende (316) aufweiset, wobei ein drehbewegliches Drehelement (317) an seinem distalen Ende (316) angeordnet ist.

8. Sitzanordnung (10), nach einem Anspruch 7,
**dadurch gekennzeichnet, dass**
das Drehelement (317) elastisch an dem distalen Ende (316) gelagert ist.

9. Sitzanordnung (10), nach einem der vorhergehenden Ansprüche,
**dadurch gekennzeichnet, dass**
das Fallenelement (320) an dem Trägerelement (100), vorzugsweise endseitig, befestigt ist.

10. Sitzanordnung (10), nach einem der Ansprüche 7 bis 9,
**dadurch gekennzeichnet, dass**
der Bolzen (315) hohl ausgebildet ist und ein Vorspannelement (318) aufweist.

11. Fahrzeug des Personentransports (1), vorzugsweise spurgeführtes Fahrzeug, umfassend zumindest eine Sitzanordnung (10) nach einem der Ansprüche 1 bis 10.

12. Fahrzeug des Personentransports (1) nach Anspruch 11,
**dadurch gekennzeichnet, dass**
das Fahrzeug (1) eine Wand (2), vorzugsweise eine Seitenwand, aufweist und die Sitzanordnung (10) an der Wand (2) befestigt ist.
